# EUROPÄISCHE PATENTSCHRIFT

(11) **EP 0 604 863 B1**
(45) Veröffentlichungstag und Bekanntmachung des Hinweises auf die Patenterteilung: **27.12.1996**
(21) Anmeldenummer: 93120474.7
(22) Anmeldetag: 18.12.1993
(51) Int. Cl.: B65D 71/00

(54) **Stapelbare Mehrwegverpackung**
Stackable reusable package
Emballage réutilisable et empilable

(30) Priorität: 31.12.1992 DE 92178820 U; 08.09.1993 DE 4330350
(43) Veröffentlichungstag der Anmeldung: 06.07.1994
(73) Patentinhaber: "WERTPAK" WIEDERVERWERTBARE VERPACKUNGSSYSTEME GmbH, D-22767 Hamburg (DE)
(72) Erfinder: Röhl, Jürgen, D-22606 Hamburg (DE); Banaskiwitz, Horst, D-133357 Berlin (DE)
(74) Vertreter: von Raffay, Vincenz, Dipl.-Ing.

(56) Entgegenhaltungen:
- CA-A- 1 018 942
- DE-A- 2 025 373
- FR-A- 2 201 672
- US-A- 3 498 523

## Beschreibung

Die Erfindung betrifft eine stapelbare Mehrwegverpackung nach dem Oberbegriff des Anspruches 1.

Derartige bekannte Verpackungen, die häufig als Kisten ausgebildet sind und die auch mehr als sechs Flaschen aufnehmen können, weisen eine oben umlaufende Kante oder einen Rand auf, der gleichzeitig einen Griff bildet und dem Stapeln dient. Der Boden des einen Trägers steht auf dem oberen Rand des anderen Trägers. Hierbei verrasten die beiden Träger oder Kisten miteinander, um beim Transport ein Verschieben zu verhindern. Die Flaschen werden hierbei nur in den Vertiefungen, sogenannten "Körbchen" gehalten, sie sind nicht belastet und nicht Teil des Rastsystems. Es sind auch Kisten bekannt, die nicht säulenartig übereinandergestapelt werden, sondern nach Art eines Verbundes, wie er beim Mauern mit Ziegelsteinen häufig Anwendung findet. Damit dieses möglich ist, sind Boden und oberer Rand entsprechend zum Verrasten ausgebildet.

Aus der FR-A-2 201 672 ist eine stapelbare Mehrwegverpackung nach dem Oberbegriff des Anspruches 1 bekannt. Diese bekannte Verpackung wird aus einer Folie durch Tiefziehen hergestellt und dann durch Falten zu dem endgültig dreidimensionalen Gegenstand aufgebaut. Der über die gesamte Längsrichtung durchgehende Handgriff einer Verpackung taucht in eine Aussparung einer darüber anzuordnenden Verpackung beim Stapeln ein. Insbesondere in Längsrichtung des Handgriffes ist eine Verschiebung möglich, die den hohen Anforderungen hinsichtlich einer sicheren Stapelung, insbesondere unter rauhen Transportbedingungen, nicht gerecht wird.

Der Erfindung liegt nun die Aufgabe zugrunde, eine stapelbare Mehrwegverpackung der eingangs genannten Art zu schaffen, die leicht ausgebildet ist und dennoch eine häufige Wiederverwendung sowohl der Flaschen als auch der Träger erlaubt und dabei auch unter rauhen Transportbedingungen sicher nach Art eines Verbundes stapelbar ist.

Diese Aufgabe wird grundsätzlich durch das Kennzeichen des Anspruches 1 gelöst.

Die stapelbare Mehrwegverpackung nach der Erfindung bezieht die Flaschen in das tragende Verbundsystem mit ein. Die Oberkanten der Flaschen oder der Flaschenverschlüsse und des Handgriffes liegen in einer Ebene. Beim Stapeln stützt sich der Boden eines oben aufgesetzten Trägers nicht nur auf dem Handgriff ab, sondern auch auf den Flaschen, die so ein Teil der Traglast übernehmen. Um für einen sicheren Verbund, d.h. für eine Verkettung beim Verbundstapeln zu sorgen, sind am Handgriff und an der Aussparung entsprechende, einander angepaßte Verriegelungsmittel vorgesehen. Diese sichern und verketten die gestapelten Träger in der waagerechten Ebene, insbesondere in Längsrichtung des Handgriffes.

In vorteilhafter Weise erfolgt die Ausbildung so wie in Anspruch 2 angegeben. Die Mulden nehmen die Flaschenverschlüsse auf und schaffen so entsprechende Rastmittel zur Übertragung eines Teils der Lasten beim Stapeln auf die Flaschen. Bei einer Ausführungsform weisen die Mulden eine Tiefe von 10 mm auf.

Die Verriegelungsmittel können in vorteilhafter Weise so ausgebildet sein, wie in Anspruch 3 angegeben. Oben an jedem Handgriff sind zwei Rücksprünge vorgesehen, denen entsprechende Vorsprünge am Boden im Bereich der Vertiefungen im kastenförmigen Träger vorgesehen sind. In jeder Vertiefung sind zwei Rücksprünge vorgesehen, die einander gegenüberliegen, d.h. bei den aussenliegenden Vertiefungen liegen sie in der Draufsicht in einem rechten Winkel zueinander. Bei den dazwischen liegenden mittleren Vertiefungen liegen sie in einem Winkel von 180° zueinander.

In besonders vorteilhafter Weise ist die Mehrwegverpackung mit den Flaschen so dimensioniert, wie in Anspruch 4 angegeben. Diese Art der Ausbildung sichert ein exaktes Stapeln im Verbund mit einem genau vorgegebenen Rastermass unter Mitwirkung der Flaschen beim Stapeln und bei der Lastübertragung im Stapel.

Wenn viele Träger übereinandergestapelt werden sollen, so kann der Stapel unsicher werden, so daß seine Stabilität nicht mehr erhöhten Anforderungen gerecht wird.

Um die Stapelsicherheit weiter zu verbessern, kann die Mehrwegverpackung nach der Erfindung so ausgestaltet sein, wie in Anspruch 5 unter Schutz gestellt.

Dadurch wird erreicht, daß die Körbchen durch den im Zwischenraum verlaufenden Steg sehr fest miteinander verbunden sind, so daß ein Aufweiten des Zwischenraumes unter Belastung praktisch nicht mehr möglich ist. Durch die Tiefe der Aussparung ist die Höhe bis zu der ein Handgriff des darunter angeordneten Trägers in den Zwischenraum eintritt, auch dann genau definiert, wenn in den beiden diesen Zwischenraum benachbarten Körbchen zufällig keine oder nur zu kleine Flaschen eingestellt wird. Dieses kann insbesondere bei Trägern verwirklicht werden, bei denen die Last des oberen Trägers über den Boden der Körbchen auf die oberen Enden der Flaschen des darunter befindlichen Trägers abgetragen wird. Je nach den bestehenden Masstoleranzen und der Nachgiebigkeit des verwendeten Kunststoffwerkstoffes kann die Lastabtragung vom oberen Träger auf den unteren Träger im einen Fall mehr oder sogar ganz über die Flaschen oder aber möglicherweise auch ganz über die erwähnten Anschläge und den Griffbügel des darunter befindlichen Trägers erfolgen. Die zweiten Verriegelungsmittel sind an den Stegen angeordnet, und zwar so, daß sie an dem Handgriff des Griffbügels angreifen, wenn der Handgriff an dem vorerwähnten Anschlag anliegt. Da der Zwischenraum zwischen den Körbchen sich nicht erweitern kann, und ausserdem in diesem Bereich die Aussparung vorgesehen ist, greifen die Verriegelungsmittel sicher in den Handgriff ein, und der Handgriff kann bei ungünstiger Belastung und auf dieser Seite fehlenden Flaschen nicht zwischen den Verriegelungsmitteln hindurch nach oben in einen leeren Zwischenraum eintreten.

Bei Ausführungsformen der Erfindung kann in der Mitte des Trägers zwischen den Körbchen ein nach oben freier Zwischenraum zum Durchtritt des beim Ineinanderschachteln leerer Träger hindurchtretenden Griffbügels des darunter befindlichen Trägers vorgesehen sein. Bei dieser Ausführungsform befinden sich daher in dem Bereich, in dem beim Ineinanderschachteln von leeren Trägern Griffbügel der unteren Träger hindurchtreten, keine Stege zwischen den Körbchen, sondern lediglich in Richtung des Umfanges des Trägers zwischen den Körbchen.

Wenn die Mehrwegverpackungen nach der Erfindung mit ihren Flaschen übereinander im Verbund gestapelt werden, dann gleiten die Böden der neu zu stapelnden Verpackungen über die Verschlüsse und Oberkanten der Handgriffe der darunter befindlichen Verpackungen, bis sie ihren gewünschten Platz einnehmen und dort verrasten bzw. verriegelt werden. Hierbei bewegen sie sich geringfügig entsprechend der Tiefe der Mulden nach unten, wobei gleichzeitig die Verriegelungselemente miteinander verrasten. Diese Verriegelung ist so, dass auch bei einem rauhen Transport, d.h. beim Bremsen und beim Beschleunigen, ein Auseinanderfallen nicht zu befürchten ist.

Im folgenden wird die Erfindung unter Hinweis auf die Zeichnungen anhand verschiedener Ausführungsbeispiele näher erläutert.

Es zeigt:
- Fig. 1: eine Seitenansicht einer Schmalseite eines Verbundstapels mehrerer Mehrwegverpackungen nach der Erfindung;
- Fig. 2: eine Einzelheit der Fig. 1 im vergrösserten Massstab im Bereich der Mulden am Boden des Trägers;
- Fig. 3: einen Schnitt durch den Handgriff im vergrösserten Massstab im Bereich der Verriegelung zwischen Handgriff und Boden;
- Fig. 4: eine Draufsicht auf die Darstellung der Fig. 3;
- Fig. 5: eine schematische Draufsicht auf eine Mehrwegverpackung zur Verdeutlichung der Verriegelung zwischen zwei übereinander gestapelten Mehrwegverpackungen nach der Erfindung;
- Fig. 6: eine Einzelheit der Fig, 5 im vergrösserten Massstab;
- Fig. 7: eine schematische Seitenansicht der Schmalseite eines Verbundstapels von Mehrwegverpackungen nach der Erfindung;
- Fig. 8: eine schematische Seitenansicht der Breitseite der Darstellung der Fig. 7;
- Fig. 9: eine Ansicht der Schmalseite einer Mehrwegverpackung nach einer weiteren Ausführungs form;
- Fig.10: eine Ansicht der Breitseite der Mehrwegverpackung nach Fig. 9 im kleineren Massstab;
- Fig. 11: einen Schnitt nach der Linie B-B der Fig. 10;
- Fig. 12: einen Schnitt nach der Linie A-A der Fig. 10;
- Fig. 13: die Ansicht einer Schmalseite eines Kreuzverbundstapels mehrerer Träger;
- Fig. 14: eine Draufsicht auf eine Schicht in dem in den Fig. 7 und 8 in Ansicht dargestellten Stapel;
- Fig. 15: zeigt eine Draufsicht auf die über der Schicht der Fig. 14 angeordnete Lage.

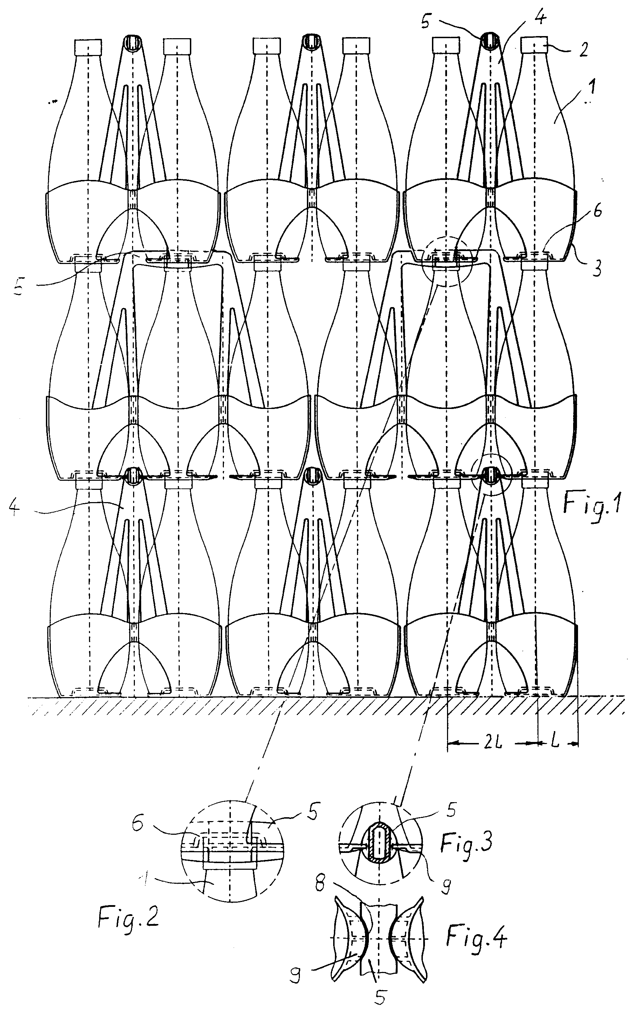

Die in den Fig. 1 bis 8 dargestellte Mehrwegverpackung besteht aus einem Träger 3 mit Griffbügel 4 und Handgriff 5 sowie sechs Flaschen 1 mit Verschlüssen 2, die einen Teil der wiederverwertbaren Verpackung bilden und beim Stapeln ein Teil der Traglast aufnehmen.

Die sechs Flaschen 1 sind in entsprechend ihrer äusseren Form angepassten sechs Vertiefungen oder Körbchen 7 angeordnet. Beim Betrachten der Fig. 1 (unten rechts) wird deutlich, dass der Abstand 2L der Flaschen untereinander jeweils doppelt so gross ist, wie der Abstand L der Flaschenmitte zur Aussenkante des kastenförmigen Trägers 3. Durch diese Dimensionierung wird die Einhaltung eines exakten Rastermasses beim Stapeln sichergestellt. Am Boden der kastenförmigen Träger 3 sind entsprechend der Anzahl der Flaschen und der Vertiefungen 7 zentrisch zu den Vertiefungen 7 Mulden 6 ausgebildet, die ungefähr 10 mm tief und der Form des Flaschenverschlusses 2 angepasst sind.

Mittig ist an jedem kastenförmigen Träger 3 ein Griffbügel 4 ausgebildet, der bei der unteren Reihe der kastenförmigen Träger in Fig. 1 im Querschnitt und bei der darüber stehenden Reihe in Seitenansicht erkennbar ist. Die entsprechende Anordnung wechselt beim Stapeln im Verbund immer ab.

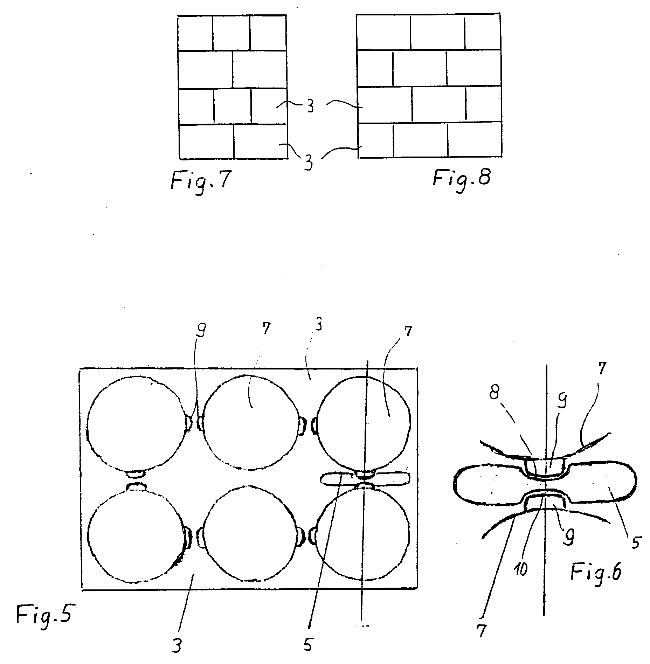

Die Oberkante der Flaschenverschlüsse liegt auf gleicher Höhe, wie die entsprechende Oberkante des Handgriffes 5. An jedem Handgriff sind erste Verriegelungselemente 8 in Form von Rücksprüngen vorgesehen, und zwar an beiden Seiten, wie es sich beim Betrachten der Fig. 4 und 6 ergibt. Diesen Rücksprüngen zugeordnet sind Vorsprünge 9, die zweite Verriegelungsmittel bilden und am Boden im Bereich der Vertiefungen 7 ausgebildet sind, so wie es beim Betrachten der Fig. 5 deutlich wird. So wie in Fig. 5 angedeutet, sind jeder Vertiefung 7 zwei Vorsprünge 9 zugeordnet, die so einander gegenüberliegen, wie es in Fig. 5 dargestellt ist. In ihrer Zuordnung beschreiben die Vorsprünge 9 ein Rechteck, das der rechteckigen Form des Trägers 3 in Draufsicht entspricht.

Bei der Ausführungsform nach Fig. 6 weisen Rück- und Vorsprünge 8 und 9 relativ gerade Abschnitt 10 auf, die die Verriegelung verstärken.

Der in Fig. 1 dargestellte Verbundstapel entspricht dem in Fig. 7 dargestellten Stapelschema, d.h. die Fig. 1 ist die Seitenansicht einer Schmalseite. In der unteren Reihe der Fig. 1 stehen drei Mehrwegverpackungen mit jeweils sechs Flaschen, von denen in dieser Darstellung der Schmalseite zwei erkennbar sind. Darüber gestapelt befinden sich zwei Mehrwegverpackungen um 90° gedreht, so daß die Breitseite und damit drei Flaschen erkennbar sind. Die Reihe darüber entspricht wieder der unteren Reihe.

Beim Betrachten der Fig. 1 und 5 wird deutlich, wie die Vorsprünge 9 am Boden des einen Trägers mit den Rücksprüngen 8 am Handgriff 5 einer darüber angeordneten Mehrwegverpackung zusammenarbeiten, um die Stapelung im Verbund zu ermöglichen. Der rechts in Fig. 5 dargestellte Handgriff 5 gehört zu einem Träger 3, der sich unter dem in Fig. 5 erkennbaren Träger befindet. Die Fig. 5 ist also praktisch "ein Schnitt", in der ein Träger 3 über dem Handgriff 5 eines anderen Trägers dargestellt sind. Entsprechendes gilt für die Fig. 6.

Beim Stapeln rasten nicht nur die Verriegelungselemente 8 und 9 miteinander ein, sondern die Mulden 6 senken sich auf die Verschlüsse 2 entsprechend ihrer Tiefe ab.

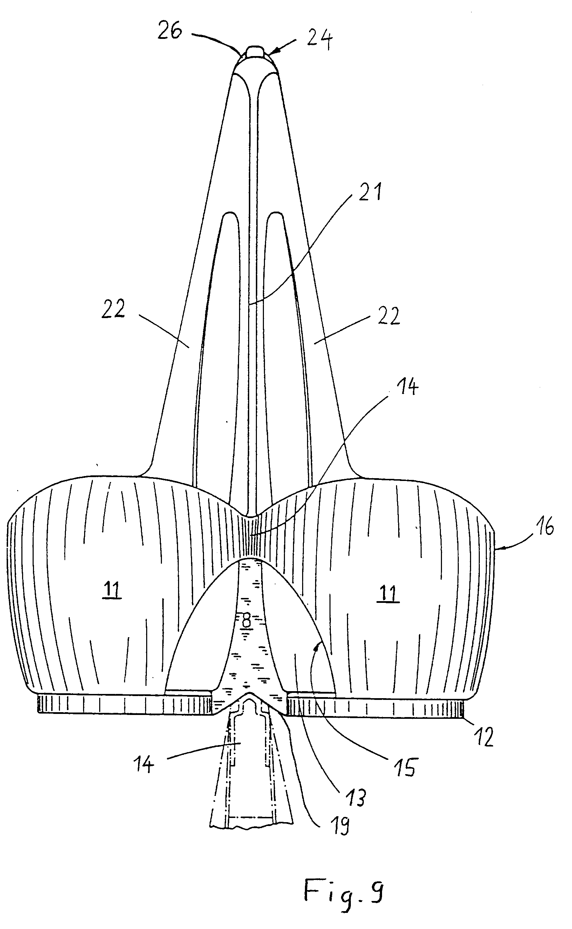

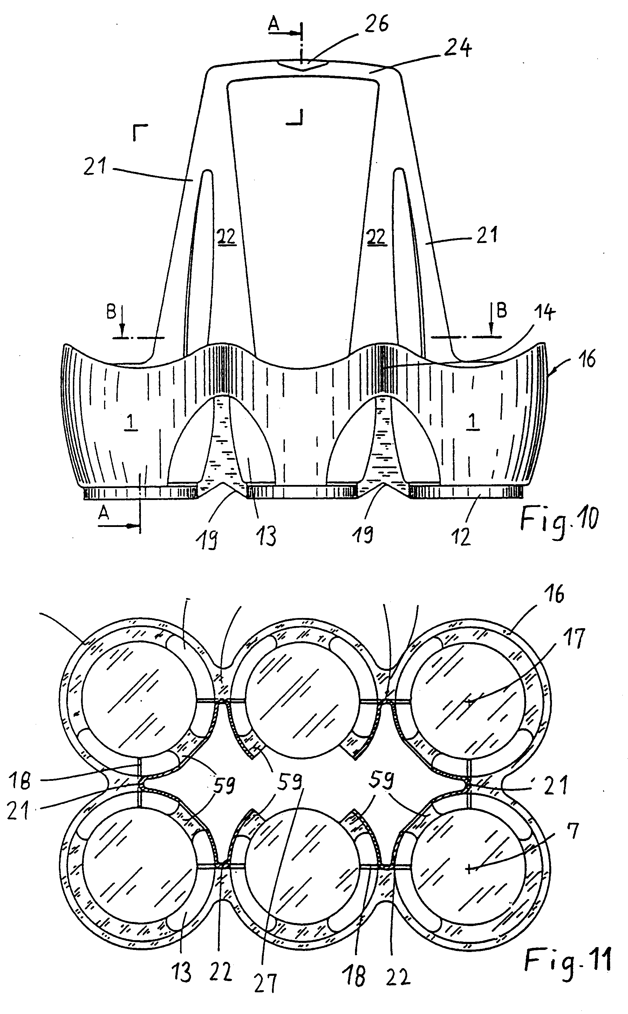

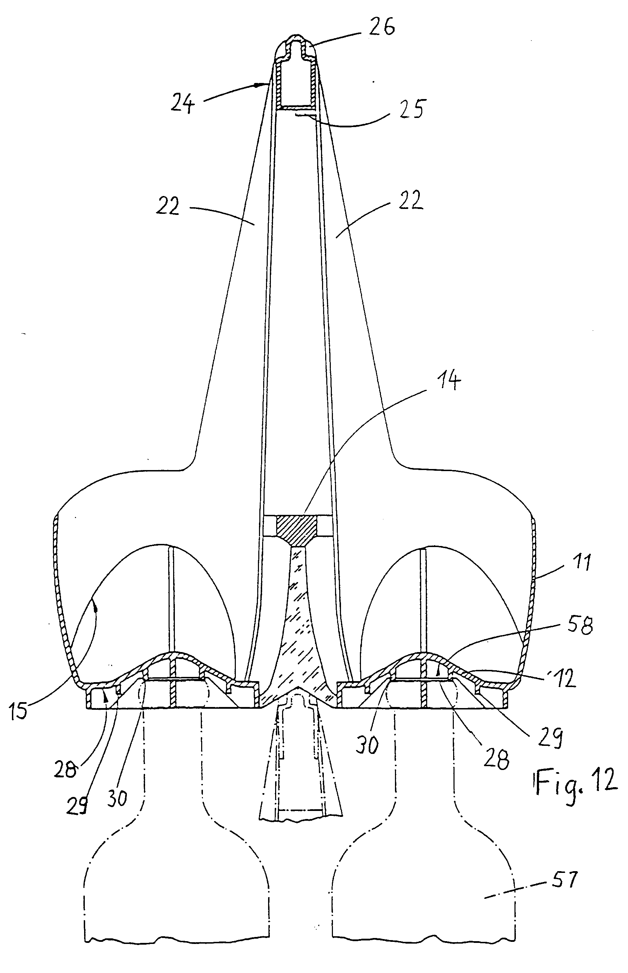

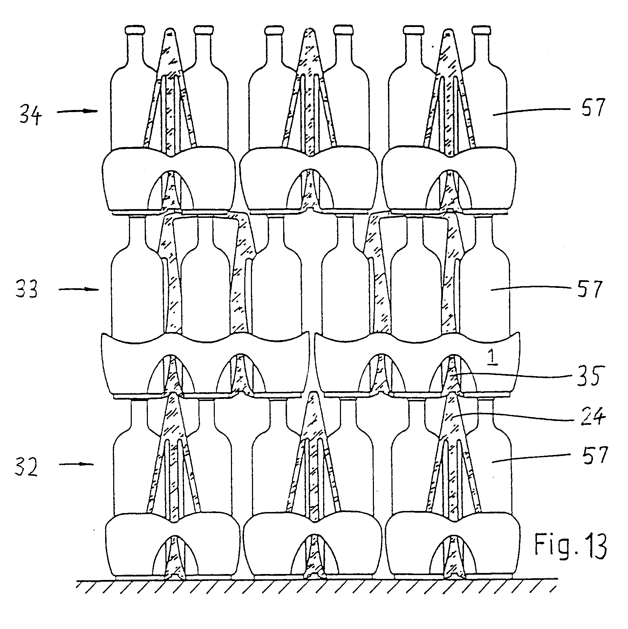

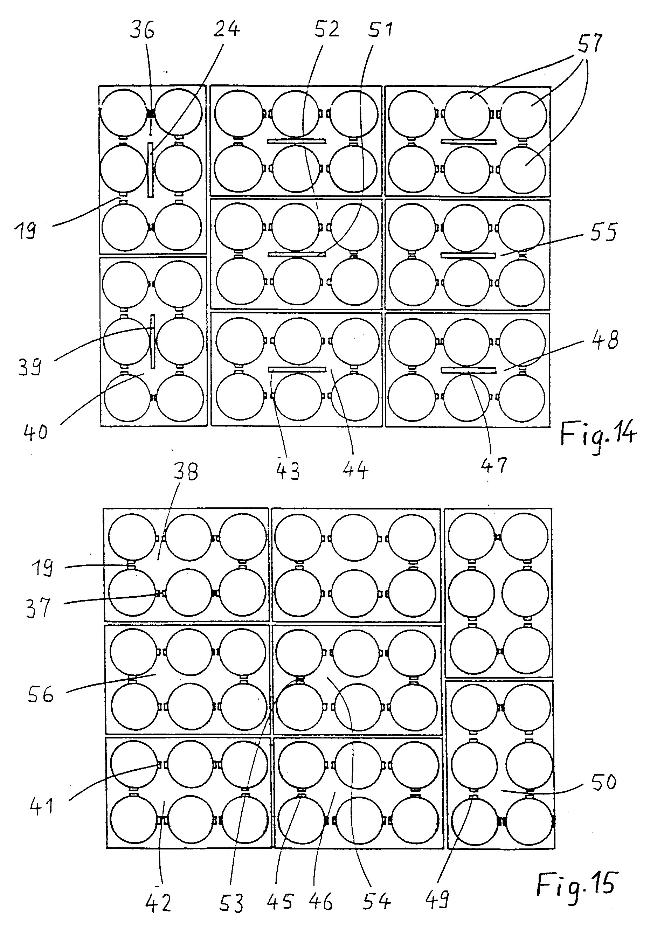

Bei der in den Fig. 9 bis 15 dargestellten Ausführungsform der Erfindung weist der Träger Vertiefungen oder Körbchen 11 mit Boden 12 auf, deren Wände 16 an den zum Trägerinneren gewandten Abschnitten durchbrochen und an den einander benachbarten Abschnitten eine Lücke 13 aufweisen, wobei aber am Rand der Lücke 13 die Wände 16 durch ein Zwischenstück 14 in der Nähe des oberen Endes der Körbchen miteinander verbunden sind. Bei der dargestellten Ausführungsform beträgt die mittlere Höhe der Körbchen ca. 85 mm bei einer angenommenen Flaschenhöhe von ca. 260 mm. Unterhalb des Zwischenstückes 14 befindet sich am Umfang des Trägers in der Wand 16 eine Aussparung 15. Etwa in der Ebene, die durch die Achsen 17 zweier benachbarter Körbchen 11 definiert ist, befindet sich in der Lücke 13 ein senkrecht verlaufender Steg 18, der an seinem unteren Rand eine keilförmige zentrische Aussparung 19 aufweist, die in der Mitte zwischen den beiden Körbchenachsen 17 angeordnet ist. Das untere Ende des Steges 18 ist mit den Böden 12 verbunden, sein oberes Ende 20 schliesst an eine Bügelstrebe 21 an, die mit unten im Abstand von der Bügelstrebe 21 an dem Körbchenboden 12 anschliessenden Bügelstreben 22 oben zusammengeführt sind und dort ein Teil 23 bilden. Dieser Bügelschenkel 21,22 verjüngt sich sowohl von der in Fig. 1 dargestellten Seite aus gesehen als auch von der in Fig. 2 dargestellten Ansicht aus gesehen nach oben und mündet oben in einen Handgriff 24, der hohl ausgebildet ist und an seiner Unterseite Stege 25 trägt. Der untere Abschnitt der Bügelstreben 21,22 bildet Teile der Begrenzungswand der Körbchen 11, die nach innen zu unterbrochen ist.

Der Handgriff 24 weist oben und aussen Einschnürungen 26 auf, in deren Bereich der Handgriff 24 beim Stapeln der vollen Träger in die Aussparung 19 des darüber angeordneten Trägers eingreift.

Die Höhe des Handgriffes 24 ist bei der dargestellten Ausführungsform der Erfindung so gewählt, dass der Handgriff etwa in der Ebene des oberen Endes der eingestellten Flaschen endet, wie Fig. 5 zeigt.

Die in der Zeichnung dargestellte Ausführungsform des erfindungsgemässen Trägers weist sechs Körbchen 11 auf, die jeweils durch die äusseren Zwischenstücke 14 längs des Umfanges miteinander starr verbunden sind. Längs des Umfanges sind diese Körbchen durch die Stege 18 miteinander verbunden. In der Mitte des Trägers befindet sich jedoch eine Aussparung 27, durch die beim Ineinanderschachteln leerer Träger der Griffbügel des darunter angeordneten Trägers hindurchgreift.

Der Boden 12 weist an seiner Unterseite eine Mulde 28 auf, in der senkrecht verlaufende Stege 29,30 angeordnet sind, die sich auf das obere Ende einer in den darunter liegenden Trägern eingesetzten Flasche abstützen. Zumindest ein Teil der Lastabtragung eines Stapels von mit Flaschen bestückten Trägern erfolgt über die in den Träger eingesetzten Flaschen 57 und über die Böden 12 der Körbchen 11 auf die oberen Enden der Flaschen des darunter angeordneten Trägers. Bei der dargestellten Ausführungsform ist die Aussparung 19 im Steg 18 so gewählt, dass sie den Handgriff 24 im Bereich der Einschnürungen 26 umfasst und diesen fixiert. Der Handgriff 24 mit den Einschnürungen 26 bildet daher zusammen mit der Aussparung 19 im Steg 18 Verriegelungsmittel, die bei Bedarf auch zur Lastabtragung mit herangezogen werden können, bei anderen Ausführungsformen jedoch lediglich zur Zentrierung und zur Sicherung der Lage der übereinander gestellten Träger dient.

Die Mulde 28 ist durch die Unterseite einer Wölbung 58 des Bodens 12 gebildet, die in eine entsprechende Wölbung im Boden der eingestellten Flaschen eingreift. Ausserdem werden die Flaschen 57 in den Körbchen 11 durch die äusseren Wandabschnitte 16 und die Fussausschlüsse 59 der Bügelstreben 21 und 22 am Boden 12 sowie deren unteren Abschnitte gehalten. Die Bügelleisten 21, 22 können im Querschnitt abschnittsweise ein offenes Winkelprofil aufweisen.

Bei der dargestellten Ausführungsform weist der Träger zwei nebeneinander angeordnete Reihen von je drei Trägern auf, die Erfindung kann jedoch auch bei Trägern mit mehr als sechs Körbchen verwirklicht werden, beispielsweise bei Trägern mit zwei nebeneinander angeordneten Reihen Körbchen oder mit vier nebeneinander angeordneten Reihen Körbchen oder dergleichen.

Die dargestellte Ausführungsform der Erfindung eignet sich insbesondere zur Stapelung im Kreuzverbund, der in den Fig. 6 bis 9 erläutert ist. Fig. 6 zeigt eine Ansicht der schmalen Seite eines Stapels Träger. In der unteren Reihe 32 sind drei Träger mit der schmalen Seite nach vorne angeordnet, so wie sie in Fig. 1 dargestellt sind. In der darüber angeordneten Reihe 33 sind die Träger der Breite nach angeordnet, wie sie in der Fig. 2 dargestellt sind. In der oberen Reihe 34 sind die Träger wieder wie in der unteren Reihe 32 angeordnet. Dabei kommt (Fig. 5) die Aussparung 19 des Steges 35 der oberen Reihe über den Handgriff 25 des darunter befindlichen, gegenüber dem oberen Träger um 90° gedrehten Träger der unteren Reihe zu liegen und verrastet so die beiden um 90° gegeneinander gedrehten Träger.

In Fig. 8 ist eine Draufsicht auf eine untere Reihe bzw. Lage des in Fig. 6 und 7 in Ansichten dargestellten Flaschenstapels gezeichnet, Fig. 9 zeigt die darüber liegende Lage der Träger. Die Aussparung 19 in dem Steg 18 ist der besseren Darstellung halber durch zwei Noppen dargestellt. Man erkennt, dass der Handgriff 24 eines unteren Trägers 36 in die Aussparung 37 eines darüber liegenden Trägers 38 eingreift, der Handgriff 39 eines unteren Trägers 40 in die Aussparung 41 eines oberen Trägers 42. Der Handgriff 43 des unteren Trägers 44 greift in die Aussparung 45 des oberen Trägers 46 ein und der Handgriff 47 des unteren Trägers 48 in die Aussparung 49 des Trägers 50. Der Handgriff 51 des unteren Trägers 52 greift in die Aussparung 53 des oberen Trägers 54 ein.

Insgesamt ist durch diese Art der Verriegelung der einzelnen Kästen der Stapel sehr stabil.

## Patentansprüche

1. Stapelbare Mehrwegverpackung für vorzugsweise sechs Flaschen (1,57) die in einem rechteckigen, kastenförmigen Träger (3,16) mit Griffbügel (4,5,21,22,24) in zwei Reihen in entsprechenden Vertiefungen (7) oder Körbchen (11) nebeneinander angeordnet sind, wobei der Griffbügel in der Mitte des kastenförmigen Trägers vorgesehen ist und mit seinem Handgriff (5,24) bis zur Oberkante der Flaschenenden oder Flaschenverschlüsse verläuft, und am Boden (12) des kastenförmigen Trägers im Bereich der Vertiefungen oder Körbchen Aussparungen (19) zur Aufnahme des Handgriffes eines darunter angeordneten kastenförmigen Trägers ausgebildet sind, dadurch gekennzeichnet, daß an den Handgriffen (5,24) erste Verriegelungsmittel (8,26) und an den Aussparungen (19) zweite Verriegelungsmittel (9) an den einander zugekehrten, außen liegenden Seiten der Vertiefungen (7) oder Körbchen (11) ausgebildet sind.

2. Stapelbare Mehrwegverpackung nach Anspruch 1, dadurch gekennzeichnet, daß an der Unterseite des Bodens (12) der kastenförmigen Träger (3,16) Mulden (6,28) zum Einrasten der darunter befindlichen Flaschenenden bzw. Flaschenverschlüsse ausgebildet sind.

3. Stapelbare Mehrwegverpackung nach Anspruch 1 oder 2, dadurch gekennzeichnet, daß die ersten Verriegelungsmittel durch Rücksprünge (8) an den Handgriffen (5) und die zweiten Verriegelungsmittel durch diesen angepaßte Vorsprünge (9) gebildet sind.

4. Stapelbare Mehrwegverpackung nach einem der Ansprüche 1 bis 3, dadurch gekennzeichnet, daß die kastenförmigen Träger (3,16) mit ihren Vertiefungen (7) oder Körbchen (11) und die Flaschen (1,57) so genau dimensioniert sind, daß der Abstand der Flaschen untereinander jeweils doppelt so groß ist, wie der Abstand der Flaschen zur Außenkante des kastenförmigen Trägers.

5. Stapelbare Mehrwegverpackung nach einem der Ansprüche 1 bis 4, dadurch gekennzeichnet, daß zur Verbindung der Körbchen (11) parallel zur Flaschenachse verlaufende Stege (18) vorgesehen sind, die an ihrem unteren Ende die Aussparung (19) mit den zweiten Verriegelungsmitteln (9) aufweisen.

6. Stapelbare Mehrwegverpackung nach einem der vorstehenden Ansprüche 1 bis 5, dadurch gekennzeichnet, daß in der Mitte des Trägers (16) zwischen den Körbchen (11) ein nach oben freier Zwischenraum (27) zum Durchtritt des beim Ineinanderschachteln hindurchtretenden Griffbügels (21,22,24) des darunter befindlichen leeren Trägers (16) vorgesehen ist.

## Claims

1. Stackable returnable pack for preferably six bottles (1, 57), which are juxtaposed in two rows in corresponding depressions (7) or baskets (11) in a rectangular, crate-like carrier (3, 16) with handles (4, 5, 21, 22, 24), the handle being located in the centre of the crate-like carrier and with its handle (5, 24) passes to the upper edge of the bottle ends or bottle closures, and on the bottom (12) of the crate-like carrier in the vicinity of the depressions or baskets are provided pockets (19) for receiving the handle of a crate-like carrier located below the same, characterized in that on the handles (5, 24) are formed first locking means (8, 26) and on the pockets (19) second locking means (9) on the facing, outer sides of the depressions (7) or baskets (11).

2. Stackable returnable pack according to claim 1, characterized in that on the underside of the bottom (12) of the crate-like carrier (3, 16) are formed troughs (6, 28) for the insertion of the underlying bottle ends or bottle closures.

3. Stackable returnable pack according to claim 1 or 2, characterized in that the first locking means are formed by recesses (8) on the handles (5) and the second locking means by projections (9) adapted thereto.

4. Stackable returnable pack according to one of the claims 1 to 3, characterized in that the crate-like carriers (3, 16) with their depressions (7) or baskets (11) and the bottles (1, 57) are so precisely dimensioned that the reciprocal spacing of the bottles is in each case twice as large as the distance from the bottles to the outer edge of the crate-like carrier.

5. Stackable returnable pack according to one of the claims 1 to 4, characterized in that for the connection of the baskets (11) there are webs (18) running parallel to the bottle axis and which have on their lower end the pocket (19) with the second locking means (9).

6. Stackable returnable pack according to one of the preceding claims 1 to 5, characterized in that in the centre of the carrier (16) between the baskets (11) is provided an upwardly free gap (27) for the passage of the handle (21, 22, 24) of the underlying, empty carrier (16), which passes through during nesting.

## Revendications

1. Emballage à jeter empilable pour de préférence six bouteilles (1, 57) qui sont placées les unes à côté des autres en deux rangées dans des renfoncements (7) ou des corbeilles (11) correspondantes dans un support (3, 16) rectangulaire en forme de caisse avec des anses de prise (4, 5, 21, 22, 24), l'anse de prise étant prévue au milieu du support en forme de caisse et allant avec sa poignée (5, 24) jusqu'à l'arête supérieure des extrémités des bouteilles ou des fermetures des bouteilles et des évidements (19) étant configurés sur le fond (12) du support en forme de caisse dans la zone des renfoncements ou des corbeilles pour loger la poignée d'un support en forme de caisse placé au-dessous, caractérisé en ce que des premiers moyens de verrouillage (8, 26) sont configurés sur les poignées (5, 24) et des seconds moyens de verrouillage (9) sont configurés sur les évidements (19) sur les côtés des renfoncements (7) ou des corbeilles (11) qui sont tournés les uns vers les autres et qui sont situés à l'extérieur.

2. Emballage à jeter empilable selon la revendication 1, caractérisé en ce que sur la face inférieure du fond (12) des supports en forme de caisse (3, 16) des creux (6, 28) sont configurés pour encliqueter les extrémités de bouteilles ou les fermetures de bouteilles qui se trouvent au-dessous.

3. Emballage à jeter empilable selon la revendication 1 ou 2, caractérisé en ce que les premiers moyens de verrouillage sont formés par des emboîtements (8) sur les poignées (5) et les seconds moyens de verrouillage par des saillies (9) adaptées aux emboîtements.

4. Emballage à jeter empilable selon l'une des revendications 1 à 3, caractérisé en ce que les supports en forme de caisse (3, 16) avec leurs renfoncements (7) ou corbeilles (11) et les bouteilles (1, 57) sont dimensionnés de telle manière que l'écart entre les bouteilles entre elles est respectivement le double de l'écartement des bouteilles par rapport à l'arête extérieure du support en forme de caisse.

5. Emballage à jeter empilable selon l'une des revendications 1 à 4, caractérisé en ce que des baguettes (18) sont prévues pour relier les corbeilles (11) parallèlement à l'axe des bouteilles, baguettes qui présentent à leur extrémité inférieure l'évidement (19) avec les seconds moyens de verrouillage (9).

6. Emballage à jeter empilable selon l'une des revendications précédentes 1 à 5, caractérisé en ce qu'un espace intermédiaire (27) libre vers le haut est prévu au milieu du support (16) entre les corbeilles (11) pour le passage de l'anse de prise (21, 22, 24) du support (16) vide qui se trouve au-dessous, anse qui traverse lors de l'emboîtement.
